# EUROPEAN PATENT APPLICATION

(11) **EP 3 115 764 A1**
(43) Date of publication of application: **11.01.2017**
(21) Application number: 15176266.3
(22) Date of filing: 10.07.2015
(51) Int. Cl.: G01M 3/28

(54) **TEST DEVICE FOR HYPERBARIC TESTING OF A PART OF A SUBSEA DEVICE AND METHOD**

(71) Applicant: Siemens Aktiengesellschaft, 80333 München (DE)
(72) Inventor: Eastoe, Andrew Robert, 5420 Rubbestadneset (NO)

(57) **Abstract**

A test device for hyperbaric testing of a part of a subsea device (200) is provided. The test device includes a test pot (10) configured to provide a test chamber (30) around of a part of the subsea device (200) that is to be tested. A mount (20) of the test device is configured to attach the test pot (10) to the subsea device (200) such that the test pot (10) is affixed to the subsea device (200) and can be pressurized without becoming detached from the subsea device during testing. The test device further includes at least one seal (40) for sealing the test device to the subsea device (200) such that the test chamber (30) is sealed from the surrounding environment. A pressure port (51) is further provided for pressurizing a medium in the test chamber (30) to a test pressure that is higher than an ambient pressure in the surrounding environment.

## Description

### FIELD OF THE INVENTION

The invention relates to a test device for hyperbaric testing of a part of a subsea device, and to a method of applying pressure to a part of a subsea device for hyperbaric testing.

### BACKGROUND

Due to the increasing energy demand, offshore oil and gas production is moving into deeper waters. For ensuring an efficient and secure production of hydrocarbons from a subsea well, processing facilities are being installed at the ocean floor. Such subsea installations can comprise a range of components, including pumps, compressors and the like as well as a power grid for providing such components with electric power. The power grid may for example comprise a subsea transformer, subsea switchgear and subsea variable speed drives (VSDs). The flow of hydrocarbons from a well is often controlled by means of a subsea valve tree. Furthermore, subsea sensors such as subsea flow meters, pressure sensors or temperature sensors are often part of a subsea installation. Components of a subsea installation may be installed at water depths of 3,000 m or more, so that they are exposed to pressures up to or even in excess of 300 bars. To protect such components from the corrosive seawater and to handle the high pressures prevailing in such subsea environment, these components are provided with subsea enclosures or housings.

A subsea device can comprise a range of components, such as connectors, sensors or the like. These components may be sealed to a housing of the subsea device. Before installation, the subsea device must pass a hyperbaric test to ensure that all seals and components meet the required specifications. These tests are performed to avoid unnecessary installation and retrieval of subsea equipment which may be required upon a failure of a subsea device, such as the leakage of a seal. Retrieval and installation of subsea equipment is a costly and laborious procedure.

Hyperbaric testing of such subsea device is performed by removing the subsea device from the remaining subsea installation and transporting the subsea device to a test facility, where it is tested in a large hyperbaric tank. In the tank, a high pressure is applied to the subsea device to test the integrity of the seals.

Accordingly, hyperbaric testing is a relatively expensive and complicated procedure. If a component of the subsea device, such as an electrical connector or sensor, is removed for inspection or servicing, the previously performed hyperbaric testing is considered to be void. Accordingly, the testing has to be repeated, so that the subsea device has to be removed from the subsea installation and has to be tested again in the hyperbaric tank.

It is desirable to facilitate the testing of such subsea devices and in particular to make the testing more efficient and less expensive.

### SUMMARY

Accordingly, there is a need for improving the hyperbaric testing of subsea equipment.

This need is met by the features of the independent claims. The dependent claims describe embodiments of the invention.

According to an embodiment of the invention, a test device for hyperbaric testing of a part of a subsea device, such as a sealed connection, is provided. The test device includes a test pot configured to provide a test chamber around a part of the subsea device that is to be tested. It further comprises a mount configured to attach the test pot to the subsea device such that the test pot is affixed to the subsea device and can be pressurized without becoming detached from the subsea device during testing. At least one seal for sealing the test device to the subsea device is provided such that the test chamber is sealed from the surrounding environment. A pressure port of the test device allows pressurizing a medium in the test chamber to a test pressure that is higher than an ambient pressure in the surrounding environment.

Accordingly, by such test device, the selective pressurization of the part of the subsea device is achieved, so that the integrity of the seals of this part of the subsea device can be tested. Such test device further allows the hyperbaric testing to be performed on site, i.e. at the location at which the subsea device and/or the subsea installation of which the subsea device forms part is assembled. In particular, the hyperbaric testing can be performed even when the subsea device is mounted to another component of a subsea installation, such as a valve tree or the like. There is accordingly no longer the need to uninstall such subsea device from the remaining subsea installation and to transport it to a dedicated testing facility having a hyperbaric test tank. Accordingly, by means of such test device, the hyperbaric testing may be performed more cost efficiently, and delays in the assembly of the subsea installation may be prevented.

In an embodiment, the test pot comprises a rigid housing made of metal and having at least partly a cylindrical shape. The housing part is configured to be mounted over the part of the subsea device that is to be tested and to enclose the part of the subsea device inside the test chamber. The shape of the rigid housing may for example be adapted to the shape of the part of the subsea device that is to be tested. Accordingly, the test device can be made compact and may thus be more lightweight and more cost efficiently to produce.

In an embodiment, the test pot includes the seal. The seal may be configured and arranged to provide sealing against a housing part or flange part of the subsea device. As an example, the seal may provide sealing between a housing part of the subsea device and the rigid metal housing of the test pot. By means of such configuration, the volume of the test chamber may be kept small, and the test chamber may be formed efficiently together with a part of a housing of the subsea device.

In other embodiments, the sealing may for example occur between the mount and the subsea device, in particular a housing or housing part of the subsea device, and the mount may be sealed to the test pot.

In an embodiment, the part of the subsea device that is to be tested includes one or more seals. It may for example include a sealed connection between two housing parts, such as between the housing of a connector or of a sensor and a part of the housing of the subsea device, e.g. an adaptor part or the like. The test device is configured to provide the test chamber around the one or more seals. Accordingly, an efficient hyperbaric testing of such sealed connection is achieved.

In an embodiment, the test device is configured to be operable with a test pressure of more than 100 bars, preferably more than 200 bars, more preferably more than 300 bars. By means of such configuration, the test device may be used for hyperbaric testing of a part of the subsea device that has a rated installation depth of 3,000 m or even more. As an example, the test device may be configured to be operable at a maximum test pressure in the range between 200 and about 500 bars, preferably between about 300 and about 500 bars. The maximum test pressure may have in some configurations for example about 330 bars, or in other configurations about 450 bars.

The term 'hyperbaric' designates a pressure that is higher than the surrounding atmospheric pressure, although it should be clear that the test device may not only be employed in an atmospheric environment, but may also be employed in other mediums, such as water, for example during shallow water testing or the like.

In an embodiment, the part of the subsea device that is to be tested comprises a seal between the housing of a component, such as a bulkhead connector, and a housing of the subsea device. The housing of the component may include a flange by means of which the housing of the component is mounted to the housing of the subsea device. The test device is configured to provide the test chamber around the flange of the components housing, so that when the test device is sealed to the housing of the subsea device, the flange is located inside the test chamber. Accordingly, an efficient pressure testing of components that are mounted by means of a flange to the subsea device can be achieved.

In an embodiment, the mount may include a bearing face that is configured to bear against a surface of the subsea device. The bearing face may be positioned and shaped such that a force produced by pressurizing the test chamber is counteracted by the mount. Accordingly, while the pressurization of the test chamber may produce the force that acts to lift the test device of the subsea device, the test device may be held in place by means of the mount bearing against the surface of the subsea device.

The mount may include at least one plate that has a recess, in particular a C-shaped plate, the plate being configured to act as a retaining plate or clamp for retaining or clamping, respectively, the test pot to a structure, in particular a shoulder, on a housing of the subsea device. By providing such plate, in particular having a C-shape, the connecting of the test device to the subsea device may be facilitated, while the test device may be firmly secured in place.

The mount may comprise two C-shaped plates, and the plates may be configured to retain or clamp the test pot to a housing portion of the subsea device that has a smaller diameter portion around which the plates are mountable and a larger diameter portion that forms a shoulder against which one or both of the plates are configured to bear. A very robust mount may thus be obtained which achieves a relatively stable and secure attachment of the test device to the subsea device. In particular, the forces at the above outlined pressures can be significant. Such mount may provide an attachment of the test device to the subsea device that is strong enough to withstand such high forces.

As an example, the one or more plates of the mount may be bolted to the test pot, in particular to the rigid housing of the test pot.

In an embodiment, each C-shaped plate may have a complementary plate portion that complements the respective other C-shaped plate to a full circular plate configured to surround the smaller diameter portion of the subsea device's housing. Each C-shaped plate may comprise a portion of a bearing face adapted to bear against a surface of the subsea device. As an example, the complementary plate portion may protrude in axial direction from one side of the C-shaped plate and comprise a first part of the bearing face, and the other C-shaped plate may comprise a portion of the bearing face on the side that does not have the complementary plate portion, i.e. on the side that is opposite to the side of the plate from which the complementary plate portion protrudes. Accordingly, the complementary plate portion of one C-shaped plate completes an annular shape of the other C-shaped plate and thereby also completes an annular bearing face. The bearing face may be recessed in the respective complementary plate portion and the respective C-shaped plate.

The part or component of the subsea device that is to be tested may be a connector or sensor; it may in particular be a bulkhead connector.

The medium that is used in the test chamber and that is pressurized may be a liquid, in particular water.

The pressure port may comprise a fitting, in particular an autoclave fitting for the attachment of a pressure line for providing pressurized medium into the test chamber.

The test device may furthermore comprise a pump for generating the test pressure. The test device may furthermore comprise a measuring unit for measuring for example the integrity of a seal to be tested. Such measurement may also be performed by a measuring unit that forms part of the subsea device.

Furthermore, the test device may comprise a measuring port for measuring the pressure in the test chamber. The test device may further comprise a vent port for venting a medium that is present inside the test chamber when pressurized medium is filled into the test chamber through the pressure port. The pressure port or the vent port may be used as the measuring port.

According to a further embodiment of the invention, a method of applying pressure to a part of a subsea device for hyperbaric testing is provided. The method comprises the steps of providing a test chamber around a part of the subsea device by mounting a test pot to the subsea device, wherein the test chamber is sealed from the surrounding environment by means of a seal; fixing the test pot to the subsea device by means of a mount such that the test pot can be pressurized without becoming detached from the subsea device during testing; and pressurizing a medium in the test chamber to a test pressure that is higher than an ambient pressure.

By means of such method, a fast and efficient hyperbaric testing of the part of the subsea device may be achieved. In particular, the part of the subsea device can be tested without the need to remove the subsea device from a subsea installation. The method may in particular be performed at the assembly side of the subsea device or subsea installation, so that it is not necessary to transport the subsea device to a test facility which has a hyperbaric test tank.

In an embodiment, the method is performed on site. In particular, the method may be performed at a location at which the subsea device is assembled. The method may generally be performed topside, i.e. above the sea surface.

In an embodiment, the step of pressurizing a medium in the test chamber may comprise pressurizing the medium to a pressure above 100 bars, preferably above 200 bars, more preferably above 300 bars. By means of such method, hyperbaric testing of a part of a subsea device that is rated for an installation depth of up to 3,000 m or even more may be performed.

In an embodiment of the method, the step of fixing the test pot to the subsea device comprises the step of providing at least one plate, preferably two C-shaped plates, around a smaller diameter portion of the subsea device and mounting the test pot to the at least one plate. The at least one plate may have a bearing face that bears against a larger diameter portion of the subsea device when the test chamber is pressurized, thereby affixing the test pot to the subsea device. By means of such method, the test device may be mounted relatively fast and efficiently to the subsea device. Furthermore, by mounting the test device in the way as described in the embodiment, a strong and effective mount may be achieved which is capable of withstanding the high pressures during testing.

In an embodiment, the part of the subsea device that is to be tested comprises a seal, wherein the method further comprises the step of testing the integrity of the seal. As outlined above, this may for example be done by means of a measuring unit, for example by measuring the ingress of the medium, such as water, through the seal into the subsea device, by measuring the pressure drop in the test chamber or the like.

The method may be performed with a test device that is configured in accordance with any of the above outlined embodiments. Furthermore, the test device may be configured so as to perform any of the methods described herein.

It is to be understood that the features mentioned above and those yet to be explained below can be used not only in the respective combinations indicated, but also in other combinations or in isolation without leaving the scope of the present invention.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
- Figure 1: is a schematic diagram showing a sectional view of a test device according to an embodiment of the invention.
- Figure 2: is a schematic drawing showing a perspective view of a test pot of the test device of Figure 1.
- Figure 3: is a schematic drawing showing a perspective view of a part of a mount of the test device of Figure 1.
- Figure 4: is a schematic drawing showing a perspective view of a part of a mount of the test device of Figure 1.
- Figure 5: is a schematic drawing showing a perspective view of a subsea device to which a test device according to an embodiment of the invention is mounted.
- Figure 6: is a flow diagram illustrating a method according to an embodiment of the invention.

### DETAILED DESCRIPTION

In the following, embodiments of the invention are described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art.

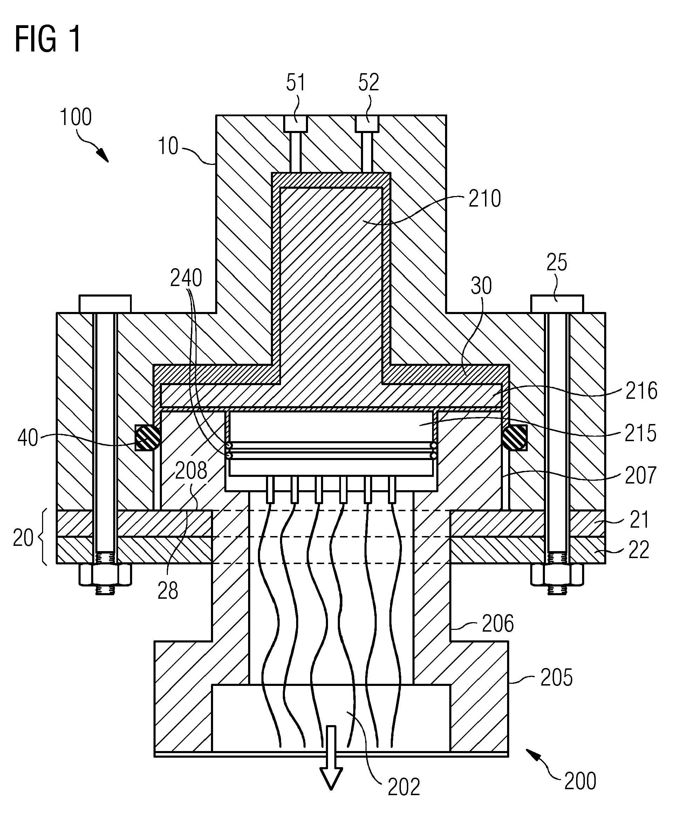

Figure 1 is a schematic drawing showing a sectional view of a test device 100 according to an embodiment. The test device 100 is mounted to a subsea device 200 for performing a hyperbaric testing of a part of the subsea device. The subsea device 200 includes a component 210 which in the present example is a part of a bulkhead connector. The subsea device 200 includes a housing 205 to which the component 210 is mounted by means of a flange 216. The component 210 includes a housing 215, and sealing is provided between the housing 205 and the housing 215 by means of two O-ring seals 240. When after service or inspection, the component 210 is installed on the housing 205 of the subsea device 200, the subsea device 200 has to undergo hyperbaric testing in order to ensure the integrity of the seal provided by O-rings 240.

The test device 100 is mounted to the subsea device 200 to provide an environment in which the pressure can be controlled around the component 210 that has to be tested. It should be clear that the test device 100 can be applied to all kinds of components and to provide hyperbaric testing for any desired element, the application is not restricted to bulkhead connectors and the testing of seals.

The test device 100 includes a test pot 10 that provides a test chamber 30 around the component 210 to be tested. The test chamber 30 is confined between the component 210 to be tested, the test pot 10, and parts of the housing 205 of the subsea device 200. The test device 100 comprises a seal 40 that provides sealing between the test pot 10 and the housing 205. The test pot 10 includes a pressure port 51 through which a medium can be introduced into the test chamber 30 and can be pressurized to the desired test pressure. It further includes a second port 52 through which for example a medium such as air may escape during the filling of the test chamber 30 with the test medium. The pressure port 51 and the second port 52 may be provided with respective fittings for providing a connection to for example tubing or pipes, through which the test medium is introduced and pressurized. The test device 100 may furthermore comprise such fittings, pipes and a respective pump for pressurizing the test medium. The medium that is introduced into the test chamber 30 and is pressurized may for example be water, such as fresh water or seawater, or may in other embodiments comprise another liquid such as oil, or may comprise a gas such as helium or nitrogen or the like. The vent port 52 can be plugged after the test chamber 30 is filled with the test medium.

The test device 100 is configured to allow pressurization of the test chamber 30 to a pressure of up to at least 200 bars, or even up to at least 300 bars. Accordingly, hyperbaric testing for a rated installation depth of the subsea device 200 of 3,000 m or more may be achieved.

Upon application of such high pressures to the medium in the test chamber 30, the pressurized medium will apply significant forces to the test pot 10 to separate the test pot 10 from the subsea device 200. To counteract such forces, the test device 100 comprises a mount 20 that is configured to firmly attach the test pot 10 to the subsea device 200. In the example of Figure 1, the mount 20 comprises a first plate 21 and a second plate 22. The configuration of the housing 205 of the subsea device 200 is in the example of Figure 1 such that the housing has a smaller diameter portion 206 and a larger diameter portion 207. Between the smaller diameter portion 206 and the larger diameter portion 207, a shoulder 208 is formed. Such configuration may for example be found on an adapter piece having a mounting flange, the adapter piece forming part of the housing of the subsea enclosure 200. In this respect, it is mentioned that the housing 205 does not need to be a single piece housing, but rather can include several housing parts that are mounted together.

The mount 20 includes a bearing face 28 that bears against a surface of the subsea device 200 that is provided by the shoulder 208. The plates 21, 22 are thus mounted around the smaller diameter portion 206 and rest and bear against the shoulder 208 upon application of pressure to the test chamber 30. The forces generated by the high pressures provided in the test chamber 30 are thus counteracted efficiently.

As illustrated in figure 1, the mount 20 can be mounted to the test pot 10 by means of bolts 25 that reach through through-holes in the test pot 10 and the mount 20. Mounting and un-mounting of the test device 100 to the subsea device 200 is thus facilitated.

Inside the housing 205 of the subsea device 200, a predetermined pressure may be maintained in the chamber 202, such as an almost atmospheric pressure, e.g. between 1bar and 2bar. The seals 240 that are to be tested thus provide separation between the high pressure environment outside the subsea device 200 when it is installed subsea and the internal atmospheric chamber 202. By means of the test device 100, such high ambient pressures can be simulated, so that the seals 240 can be tested. For this purpose, the test device 100 may furthermore comprise a measuring unit (not shown) that provides measurements to determine the integrity of the seals 240. As an example, a pressure drop in the test chamber 30 may be measured, or the ingress of test medium through the seals 240 into the chamber 202 may be determined, for example by measuring the conductivity of a medium inside the chamber 202 or the like.

Hyperbaric testing may for example include the performing of a function test of the subsea device or of part of the subsea device, e.g. of a sensor of the subsea device, prior to hyperbaric testing, the application of the test pressure by means of the test device while monitoring the test pressure, and performing a corresponding function test after the pressure test is completed. A pressure drop may for example indicate a leak through one of the seals. Similarly, any deviation of the results of the two function tests may indicate a negative result of the hyperbaric testing and thus a failure. In such case, the component can be removed and inspected for identifying the failure.

By means of the test device 100, it becomes possible to perform a hyperbaric test of a part of the subsea device 200 without the need to completely remove the subsea device 200 from the remaining subsea structure and transporting it to a dedicated test facility where the whole subsea device 200 is tested in a hyperbaric tank. By means of the test device 100, costs and possible delays that accompany such offsite testing can be avoided. In particular, the hyperbaric testing can be performed onsite, meaning it can be performed at the location at which the subsea device 200 or the respective subsea installation is assembled, and at which the component 210 is for example removed from the subsea device 200 for service or inspection.

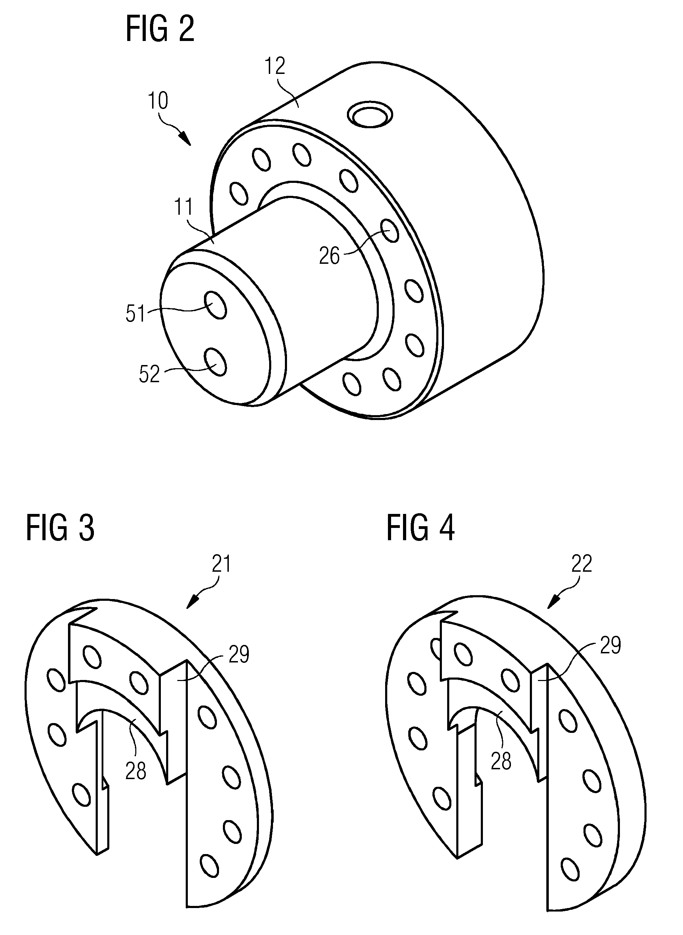

Figure 2 is a perspective view showing the test pot 10 of the test device 100 in more detail. As can be seen, the test pot 10 includes a rigid housing that is generally made of metal, such as steel, and that has a cylindrical shape. In particular, it has a first smaller cylindrical portion 11 and a larger cylindrical portion 12. It should be clear that the shape of the housing of the test pot 10 may be adapted to the particular application. Accordingly, if the component to be tested has a different shape, the shape of the test pot 10 may be adapted to the shape of such component and may thus differ substantially from the example illustrated in Figure 2. In particular, the shape of the test pot 10 can be configured such that its inner perimeter corresponds substantially to the outer perimeter of the component of the subsea device to be tested, so that the volume of the test chamber 30 is kept relatively small.

The test pot 10 furthermore includes the through-holes 26 into which bolts 25 can be inserted for mounting the mount 20 to the test pot 10. Furthermore, the pressure port 51 and the second port 52 are visible in Figure 2.

In Figure 2, there is furthermore indicated an additional port on the cylindrical section 12 of the test pot 10. The additional port may used similarly for expelling a medium such as air from the test chamber when the test chamber is being filled with the test medium. The additional port can be used as a vent port when the test device is installed in a horizontal orientation, as depicted in figure 2. When installed in a vertical orientation, as depicted in figure 1, the second port 52 can be used as a vent port. Both, the additional port and the second port 52 can be plugged after filling the test chamber with the test medium is complete. By providing two ports at different locations for venting air, it is possible to mount the test pot 10 in different orientations to the subsea device 200.

Figures 3 and 4 are perspective views that schematically illustrate a possible implementation of the mount 20. Figure 3 shows a first plate 21 that has a C-shape so that it can easily be mounted to the smaller diameter portion 206 of the housing 205 of the subsea device 200. On one side, the plate 21 has a bearing face 28 that is recessed in the surface of this side of the plate 21. The bearing face 28 is configured to bear against the shoulder 208 illustrated in Figure 1. On its other side, the plate 21 has a complementary plate portion 29 that complements the second C-shaped plate 22 shown in Figure 4.

Turning now to Figure 4, the second plate 22 is similarly C-shaped, and has on one side also a complementary plate portion 29 that protrudes in axial direction from the plate 22. The complementary plate portion 29 of the second plate 22 complements the first plate 21. As can be seen, the complementary plate portion 29 also includes a portion of the bearing face 28 that is recessed in the complementary plate portion 29. Accordingly, when the first and second plates 21 and 22 are joined together, the portion 29 of plate 22 complements plate 21 to a full annular shape and thus also complements the bearing portion 28 to a fully annular bearing portion. Similarly, the complementary plate portion 29 of the first plate 21 completes the second plate 22 to a full annular shape.

When joining the first and second plates 21, 22, the first plate 21 is for example turned about 180 degrees from the position in Figure 3 so that the complementary plate portion 29 faces the respective other plate. Both plates are then shifted onto the smaller diameter portion 206 of the housing 205 of subsea device 200, and are fixed with bolts to the test pot 10, as illustrated in Figure 1. A strong and secure attachment of the test device 100 to the subsea device 200 can thus be achieved, while the mounting procedure is relatively fast and efficient.

It is noted then that in the example of Figures 3 and 4, also the other side of the mount 20 has a respective recess corresponding to the bearing face 28, yet it should be clear that this is not required. It rather facilitates the mounting procedures since it is not necessary to pay attention whether the first or the second plate 21, 22 faces the test pot 10.

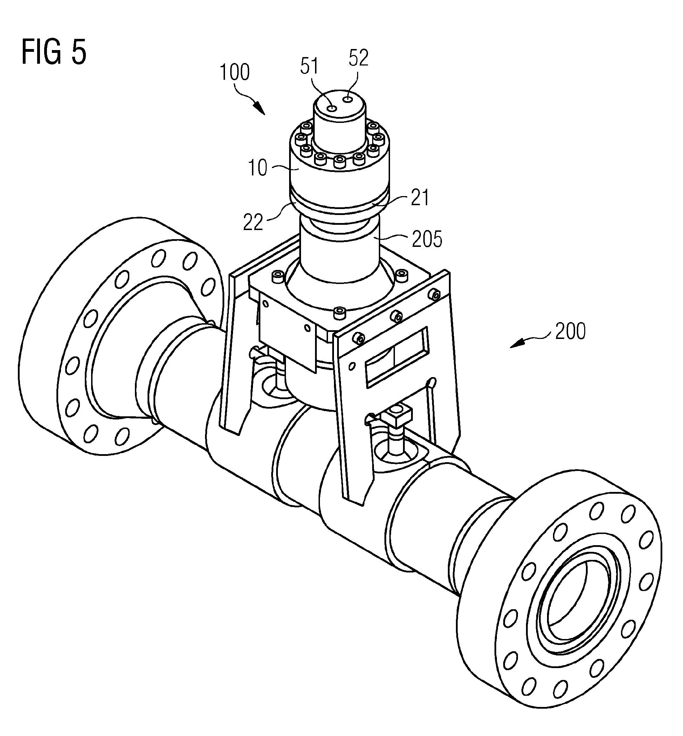

Figure 5 shows a particular example for the application of the testing device 100. In the example of Figure 5, the subsea device 200 is a subsea flow meter that includes a section of pipe through which a fluid is conveyed and to which pressure sensors are mounted for measuring differential pressure across a restriction. The housing 205 may for example include electric and electronic components for the pressure sensors, for processing sensor signals or the like. The subsea device 200 comprises a component 210 in form of a bulkhead connector, as illustrated in Figure 1, which may for example be a test connector. In the example of Figure 5, the test pot 10 is mounted to the subsea device 200 by means of the mount 20 including the plates 21 and 22. It encloses the component to be tested. After removal and installation of the bulkhead connector, the hyperbaric testing of the bulkhead connector can thus be performed fast and efficiently. In particular, the subsea flow meter does not need to be removed from the remaining structure, such as a valve tree, and sent to a test facility for performing the hyperbaric testing.

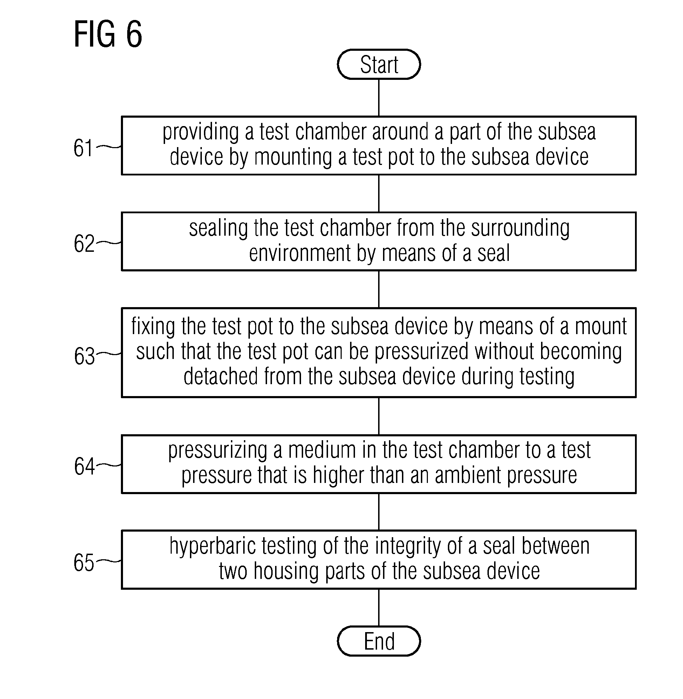

Figure 6 shows a flow diagram of a method according to an embodiment which can be performed by using the test device as described in any of the above outlined configurations. In step 61, a test chamber is provided around a part of the subsea device by mounting a test pot to the subsea device. As an example, the test pot 10 may be placed over the component 210 in step 61, as illustrated in Figure 1. In step 62, the test chamber is sealed from the surrounding environment by means of a seal. This may for example be the seal 40 as shown in Figure 1. Note that the sealing may occur automatically upon placing the test pot over the component 210 to be tested.

In step 63, the test pot is fixed to the subsea device by means of a mount such that the test pot can be pressurized without becoming detached from the subsea device during testing. As an example, in step 63, the first and second plates 21, 22 may be joined around the smaller diameter portion 206 of the housing 205 and may then be bolted with bolts 25 to the test pot 10.

In step 46, a medium in the test chamber is pressurized to a test pressure that is higher than the ambient pressure. This may for example include the filling of the test chamber 30 with a medium, such as water, and then applying the respective test pressure via the pressure port 51, for example by using a respective pump and a pressure sensor for controlling the pressure.

In step 65, hyperbaric testing is performed for testing the integrity of the seal between the housing parts 205, 215 of the subsea device. As an example, the pressure in the test chamber may be monitored to detect a pressure drop and/or a function testing of the component may be performed prior and after the application of the pressure to determine any influence on the component's operation. This way, it may for example be detected whether any of the test medium penetrates the seals 240.

Accordingly, by means of such method, a fast and efficient hyperbaric testing of a part of a subsea device, such as the component 210, can be performed. Preferably, the method is performed onsite. It should be clear that the method may be used for hyperbaric testing of other parts of a subsea device, and that the test device may be adapted correspondingly for the particular part of the subsea device that is to be tested. Fast and efficient hyperbaric testing of a part of a subsea device is thus achieved.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A test device for hyperbaric testing of a part of a subsea device, in particular a sealed connection, comprising
- a test pot (10) configured to provide a test chamber (30) around a part of the subsea device (200) that is to be tested,
- a mount (20) configured to attach the test pot (10) to the subsea device (200) such that the test pot is affixed to the subsea device and can be pressurized without becoming detached from the subsea device during testing,
- at least one seal (40) for sealing the test device (100) to the subsea device (200) such that the test chamber (30) is sealed from the surrounding environment,
- a pressure port (51) for pressurizing a medium in the test chamber (30) to a test pressure that is higher than an ambient pressure in the surrounding environment.

2. The test device according to claim 1, wherein the test pot (10) comprises a rigid housing made of metal and having at least partly a cylindrical shape (11, 12), wherein the housing is configured to be mounted over the part of the subsea device (200) that is to be tested and to enclose the part inside the test chamber (30).

3. The test device according to claim 1 or 2, wherein the test pot (10) includes the seal (40), the seal being configured and arranged to provide sealing against a housing part (207) or flange part of the subsea device.

4. The test device according to any of the preceding claims, wherein the part of the subsea device (200) that is to be tested includes one or more seals (240), the test device (100) being configured to provide the test chamber (30) such that the test pressure is applied to the one or more seals (240).

5. The test device according to any of the preceding claims, wherein the test device (100) is configured to be operable with a test pressure of more than 100 bar, preferably more than 200 bar, more preferably more than 300 bar.

6. The test device according to any of the preceding claims, wherein the part of the subsea device that is to be tested comprises a seal (240) between the housing (215) of a component (210), such as a bulkhead connector, and a housing (205) of the subsea device, the housing (215) of the component (210) including a flange (216) by means of which the housing of the component is mounted to the housing (205) of the subsea device (200), wherein the test device (100) is configured to provide the test chamber (30) around the flange of the component's housing (215), so that when the test device is sealed to the housing (205) of the subsea device, the flange (216) is located inside the test chamber (30).

7. The test device according to any of the preceding claims, wherein the mount (20) includes a bearing face (28) that is configured to bear against a surface of the subsea device, the bearing face (28) being positioned and shaped such that a force produced by pressurizing the test chamber (30) is counteracted.

8. The test device according to any of the preceding claims, wherein the mount (20) includes at least one plate (21, 22) that has a recess, in particular a C-shaped plate, the plate being configured to act as a retaining plate or clamp for retaining or clamping, respectively, the test pot (10) to a structure, in particular a shoulder (208), on a housing (205) of the subsea device.

9. The test device according to any of the preceding claims, wherein the mount (20) comprises two C-shaped plates (21, 22), the plates being configured to retain or clamp the test pot (10) to a housing portion of the subsea device that has a smaller diameter portion (206) around which the plates (21, 22) are mountable and a larger diameter portion (207) that forms a shoulder (208) against which one or both of the plates are configured to bear.

10. The test device according to claim 9, wherein each plate has a complementary plate portion (29) that is shaped to complement the respective other plate into an annular shape when the two plates (21, 22) are joined together.

11. A method of applying pressure to a part of subsea device for hyperbaric testing, comprising the steps of
- providing a test chamber (30) around a part of the subsea device (200) by mounting a test pot (10) to the subsea device, wherein the test chamber (30) is sealed from the surrounding environment by means of a seal (40),
- fixing the test pot (10) to the subsea device by means of a mount (20) such that the test pot can be pressurized without becoming detached from the subsea device (200) during testing, and
- pressurizing a medium in the test chamber (30) to a test pressure that is higher than an ambient pressure.

12. The method according to claim 11, wherein the method is performed on site.

13. The method according to claim 11 or 12, wherein the step of pressurizing a medium in the test chamber (30) comprises pressurizing the medium to a pressure above 100 bar, preferably above 200 bar, more preferably above 300 bar.

14. The method according to any of claims 11-13, wherein the step of fixing the test pot (10) to the subsea device comprises the step of providing at least one plate (21, 22), preferably two C-shaped plates, around a smaller diameter portion (206) of the subsea device and mounting the test pot (10) to the at least one plate (21, 22), wherein the at least one plate has a bearing face (28) that bears against a larger diameter portion (207) of the subsea device when the test chamber (30) is pressurized, thereby affixing the test pot (10) to the subsea device (200).

15. The method according to any of claims 11-14, wherein the part of the subsea device that is to be tested comprises a seal (240), wherein the method further comprises the step of testing the integrity of the seal (240).
